# EUROPÄISCHE PATENTANMELDUNG

(11) **EP 1 818 380 A1**
(43) Veröffentlichungstag der Anmeldung: **15.08.2007**
(21) Anmeldenummer: 06101419.7
(22) Anmeldetag: 08.02.2006
(51) Int. Cl.: C09J 11/04, C08K 3/16, C08K 3/20, C08K 3/26, C08K 3/30, C08K 3/32

(54) **Dispersionsklebstoff**

(71) Anmelder: Solvay Infra Bad Hönningen GmbH, 30173 Hannover (DE)
(72) Erfinder: Die Erfindernennung liegt noch nicht vor
(74) Vertreter: Vande Gucht, Anne

(57) **Zusammenfassung**

Offenbart werden wasserbasierte Dispersionsklebstoffe, die Nanopartikel, insbesondere nanofeines Bariumsulfat, enthalten. Die Nanopartikel können ohne chemische Modifikation oder chemisch modifiziert eingesetzt werden Derartige Klebstoffe weisen verbesserte Eigenschaften auf, beispielsweise verbesserte Kohäsion bei vergleichbarer Adhäsion und höhere Wärmefestigkeit. Bevorzugt sind Dispersionsklebstoffe auf Basis von Polyacrylat und Polyurethan sowie Epoxidharz.

## Beschreibung

Die vorliegende Erfindung betrifft einen Dispersionsklebstoff, der feinteiliges Bariumsulfat enthält.

Es ist bereits bekannt, Bariumsulfat als Füllstoff für Kunststoffe einzusetzen. Die internationale Patentanmeldung WO 00/14165 offenbart die Herstellung von Bariumsulfat, welches in einem Trägermaterial feinverteilt eingebettet ist. Die Korngröße beträgt 0,01 bis 10 µm; sie weisen gute Eigenschaften bei der Mattierung auf. Die Herstellung erfolgt durch nasses Feinmahlen in Anwesenheit des Trägermaterials.

Die internationale Patentanmeldung WO 02/30994 offenbart die Zugabe eines solchen anorganischen Bariumsulfats zu Polymerrohstoffen vor der Polymerbildung. Die bevorzugte mittlere Korngröße D₅₀ des anorganischen Feststoffes, der in die organische Substanz eingebettet ist, beträgt 0,25 bis 0,45 µm. Verwendet werden die Additivzusammensetzungen in Polyester und Polyamid.

Die internationale Patentanmeldung WO 00/57932 offenbart Materialien für die chirurgische Anwendung, die sogenannte "Nanokomposite" enthalten. Die Füllstoffpartikel können mit organischen Verbindungen behandelt werden, um ihre Dispersionsfähigkeit zu verbessern, ihre Neigung zur Agglomeration oder Aggregation zu reduzieren und um die Gleichförmigkeit der Dispersion zu verbessern. Hierzu werden beispielsweise organische Verbindungen wie das Monomer des herzustellenden chirurgischen Materials, Zitrate oder andere Verbindungen eingesetzt. Brauchbar sind auch Kopplungsmittel wie Organosilane oder polymere Materialien wie Surfactants, beispielsweise Natrium-Dodecylsulfat, aber auch amphiphile Moleküle, d. h. Moleküle, die einen hydrophilen und einen hydrophoben Teil aufweisen. Genannt werden Nonylphenolethoxylate; Bis(2-ethylhexyl)sulfosuccinat; Hexadecyltrimethylammoniumbromid sowie

Phospholipide. In den Beispielen wird entweder ungecoatetes Bariumsulfat eingesetzt oder Partikel, die nach der Fällung mit Natriumzitrat gecoatet wurden.

Die WO 2005/054133 offenbart chemisch modifiziertes Bariumsulfat, das unter anderem zur Einarbeitung in Klebstoffe brauchbar ist.

Aufgabe der vorliegenden Erfindung war es, einen Klebstoff mit besonders vorteilhaften Eigenschaften zur Verfügung zu stellen. Diese Aufgabe wird durch den erfindungsgemäßen Dispersionsklebstoff gelöst.

Gegenstand der Erfindung ist ein wasserbasierter Dispersionsklebstoff, der gekennzeichnet ist durch einen Gehalt an Nanopartikeln mit einer Primärgröße von kleiner als 500 nm, vorzugsweise kleiner als 400 nm, ganz besonders bevorzugt kleiner als 100 nm, und, sofern Sekundärpartikel vorliegen, mit einer Sekundärpartikelgröße von kleiner als 1000 nm. Bevorzugt weisen 90 % oder mehr aller Sekundärpartikel eine Größe < 500 nm, mehr bevorzugt < 400 nm, ganz besonders bevorzugt < 100 nm auf; noch bevorzugter weisen 90 % der Sekundärpartikel eine Größe von < 80 nm, ganz besonders <50 nm, ja selbst <30 nm auf.

Bei den Nanopartikeln handelt es sich in der vorliegenden Erfindung um Salze von Metallen. Bevorzugt sind jene Salze von Metallen, die eine geringe Löslichkeit in Wasser und/oder organischen Lösungsmitteln aufweisen. "Geringe Löslichkeit" bedeutet vorzugsweise, dass sich weniger als 1 g/l, vorzugsweise weniger als 0.1 g/l bei Raumtemperatur (20 °C) lösen. Ganz besonders bevorzugt sind Salze, die eine geringe Löslichkeit in Wasser und organischen Lösungsmitteln aufweisen.

Bevorzugte Nanopartikel enthalten Kationen ausgewählt aus der Gruppe bestehend aus Ge, Sn, Pb, Mg, Ca, Sr, Ba und Al.

Die Anionen sind bevorzugt ausgewählt aus der Gruppe bestehend aus PO₄³⁻, SO₄²⁻, CO₃²⁻, F-, O²⁻ und OH⁻ , wobei auch Nanopartikel mit zwei oder mehr dieser Anionen wie Oxifluoriden sowie Hydrate umfasst sind.

Konkrete gut als einzusetzende Nanopartikel sind ausgewählt aus der Gruppe bestehend aus BaSO₄, SrSO₄, MgCO₃, CaCO₃, BaCO₃, SrCO₃, Zn₃(PO₄)₂, Ca₃(PO₄)₂, Sr₃(PO₄)₂, Ba₃(PO₄)₂, Mg₂(PO₄)₂, SiO₂, Al₂O₃, MgF₂, CaF₂, BaF₂, SrF₂, TiO₂, ZrO₂, Fluoriden und Oxifluoriden von Lanthanidenmetallen sowie Alkalimetall- und Erdalkalimetallfluormetallaten.

Ganz besonders bevorzugt ist Bariumsulfat als einzusetzendes Nanopartikel. Anhand der Verwendung von Nanopartikeln des Bariumsulfats wird die Erfindung weiter erläutert.

Die Primärpartikel von Bariumsulfat bilden bei der Fällung Sekundärpartikel. Das in der Erfindung eingesetzte Bariumsulfat weist, aus Nanopartikeln zusammengesetzten Sekundärpartikel einer Größe von kleiner als 1000 nm auf. Bevorzugt weisen 90 % oder mehr aller Sekundärpartikel eine Größe kleiner als 500 nm, bevorzugt < 400 nm, mehr bevorzugt < 250 nm, insbesondere < 100 nm, besonders bevorzugt < 80 nm auf; noch bevorzugter weisen 90 % der Sekundärpartikel eine Größe von <50 nm, ja selbst <30 nm auf.

Das bevorzugte eingesetzte Bariumsulfat liegt teilweise oder sogar weitgehend vollständig in Form nicht agglomerierter Primärpartikel vor. Es handelt sich um Partikelgrößen, bestimmt durch XRD bzw. Laserbeugungsmethoden. Bevorzugt sind die Primärpartikel <20 nm, ganz besonders solche mit einer mittleren Primärpartikelgröße von <10 nm. Eine oft beobachtete, herstellungsbedingte Untergrenze für die Primärpartikelgröße ist beispielsweise 5 nm, sie kann aber noch darunter liegen. Dabei liegt das Bariumsulfat teilweise oder sogar weitgehend vollständig in Form nicht agglomerierter Primärpartikel vor. Es handelt sich um mittlere Partikelgrößen, bestimmt durch XRD bzw. Laserbeugungsmethoden.

Als Dispersionsklebstoffe werden in der vorliegenden Erfindung Polymere und Copolymere bezeichnet, die in Wasser dispergiert mit Teilchengrößen von ca. 50 nm bis 1 µm vorliegen. Sie werden vorwiegend für die Verklebungen etwas saugfähiger Untergründe verwendet, dienen aber auch zunehmend aufgrund ihrer Freiheit von organischen Lösungsmitteln für die Herstellung von Folienkaschierungen (Herstellen von ein- und doppelseitigen Klebebändern). Nach dem Applizieren des Dispersionsklebstoffes auf ein Substrat verdampft das Wasser, und die Dispersionsteilchen des Klebstoffes kommen sich näher, bis sie schließlich interdiffundieren und einen geschlossenen Klebstofffilm bilden.

Dispersionsklebstoffe, insbesondere ihre chemische Zusammensetzung, ihre Herstellung und ihre Anwendung sind dem Fachmann bekannt. Einige grundlegende Informationen über die chemische Zusammensetzung und etwaige Hilfsstoffe wie Weichmacher findet man in Ullmanns Encyklopädie der technischen Chemie, Bd. 14 (1977), insbesondere Seiten 233 bis 236 und 241 und 242. Beispielsweise sind Dispersionen von Homopolymeren des Vinylacetats und Vinylpropionats und ihre Copolymere mit Ethylen oder Maleinsäureestern als Basismaterial für die erfindungsgemäßen Dispersionsklebstoffe brauchbar.

Grundlegende Informationen über wässrige Dispersionen, ihre Herstellung und Verwendung von Klebstoffen findet man in dem Buch "Wässrige Polymerdispersionen" von Dieter Distler (1999), Seiten 1 bis 28 und 125 bis 169. Polymerdispersionen in Wasser werden meist durch Emulsionspolymerisation hergestellt. Eine stabilisierte Emulsion von Monomeren wird durch Zusatz eines Initiators beim Erwärmen polymerisiert. Alternativ kann man Polymere in Lösungsmitteln lösen, diese Lösungen in Wasser emulgieren und das Lösungsmittel im Vakuum entfernen. So lässt sich beispielsweise eine wässrige Dispersion von PU erzeugen.

Drei Klebstoffklassen sind besonders bevorzugt: Klebstoffdispersionen auf Basis von Acrylat und Polyurethan (PU), sowie epoxidharzbasierte Klebstoffe. Umfasst sind auch entsprechende Copolymere, die mindestens zu 30 Gew.-% aus Acrylat bzw. PU bestehen und andere Monomere mit enthalten. Acrylat und PU können natürlich aus einem, zwei oder mehr Monomerenarten bestehen, z.B. kann man Copolymere aus Methacrylat und Butylacrylat einsetzen.

Der Feststoffgehalt in der wässrigen Dispersion beträgt gewöhnlich 40 bis 60 Gew.-% an Klebstoff.

Der Gehalt an Bariumsulfat sollte so bemessen sein, dass der gewünschte Effekt erzielt wird. Üblicherweise liegt die Menge an Bariumsulfat im Klebstoff (bezogen auf den Feststoff) im Bereich von 3 bis 25 Gew.-%.

Es ist möglich, chemisch nicht modifiziertes Bariumsulfat einzusetzen. Das Bariumsulfat wird bevorzugt einer Zerkleinerungsoperation unterworfen, z.B. einer Naßdesagglomeration. Als Flüssigkeit kann Wasser oder eine organische Flüssigkeit gewählt werden, z. B. ein Alkohol, ein Kohlenwasserstoff oder ein Halogenkohlen(wasser)stoff. Die Zerkleinerung oder Desagglomeration kann beispielsweise in Kugelmühlen, Schwingmühlen, Rührwerksmühlen, Planetenkugelmühlen oder Dissolvern mit Glaskugeln durchgeführt werden. Ein solches Verfahren wird in der DE-OS 19832304 beschrieben. Dabei werden die Feststoffe in einem Mahlbehälter mit losen Mahlkörpern gegeben und auf die gewünschte Feinheit zerkleinert. Als Mahlhilfsmittel wird z.B. Kohlendioxideis oder tiefgekühltes 1,1,1,2-Tetrafluorethan oder ähnliche Stoffe verwendet. Als Mühle eignen sich z.B. Kugelmühlen, Schwingmühlen, Rührwerksmühlen und Planetenkugelmühlen. Man erreicht dabei Partikelgrößen sogar unterhalb von 20 nm. Dieses Verfahren eignet sich auch für andere der oben genannten Salze wie CaCO₃, MgF₂ oder CaF₂.

Das zerkleinerte Bariumsulfat kann dann in genügend feiner Form in Dispersionsklebstoffen eingesetzt werden.

Bevorzugt verwendet man jedoch chemisch modifiziertes Bariumsulfat; man kann auch chemisch modifizierte Nanopartikel der weiter oben genannten Salze einsetzen.

Chemisch modifiziert im Sinne der vorliegenden Erfindung sind Nanopartikel und besonders nanofeines Bariumsulfat, wenn es bei seiner Fällung oder nach der Fällung mit Mitteln kontaktiert wurde, die bei der Fällung die Kristallvergrößerung inhibieren, und/oder das bei oder nach der Fällung mit einem Dispergiermittel kontaktiert wurde. Bevorzugte Dispergiermittel sind solche, die auch nach einer Trocknung des dispergiermittelhaltigen Bariumsulfats aus wässriger oder organischer Suspension eine Redispergierung in Wasser oder organischen Lösungsmitteln zu den ursprünglich erhaltenen nanofeinen Partikeln ermöglichen.

Ein chemisch modifiziertes Bariumsulfat, das besonders gut im Rahmen der vorliegenden Erfindung einsetzbar ist, wird in der oben schon erwähnten WO 2005/054133 offenbart. Das dort beschriebene Bariumsulfat ist mittels eines Dispergiermittels oberflächenmodifiziert; bevorzugt wurde die Fällung des Bariumsulfats in Anwesenheit eines kristallisationsinhibierenden Mittels durchgeführt. Bei der dort beschriebenen Herstellungsweise wird desagglomeriertes Bariumsulfat in Form von sehr kleinen Sekundärpartikeln erhalten, das vielfach selbst nach seiner Trocknung leicht zu den ursprünglichen Teilchen redispergiert werden kann. Das ist deshalb von Vorteil, weil die Primärpartikel von Bariumsulfat, obwohl sie an sich im Nanobereich liegen, zur Bildung von großen Sekundärpartikeln neigen. Im Folgenden wird erläutert, wie das in der vorliegenden Erfindung bevorzugt einzusetzende Bariumsulfat hergestellt werden kann. Eine eingehende Beschreibung findet sich in der genannten WO 2005/054133.

Ein bevorzugtes Bariumsulfat ist erhältlich durch Fällen von Bariumsulfat in Anwesenheit eines kristallisationsinhibierenden Mittels, wobei während der Fällung ein Dispergiermittel anwesend ist und/oder das Bariumsulfat nach der Fällung in Anwesenheit eines Dispergiermittels desagglomeriert wird.

Die Menge an kristallisationsinhibierendem Mittel und Dispergiermittel im desagglomerierten Bariumsulfat ist flexibel. Pro Gewichtsteil Bariumsulfat können jeweils bis zu 2 Gewichtsteile, vorzugsweise bis zu 1 Gewichtsteil kristallisationsinhibierendes Mittel und Dispergiermittel enthalten sein. Kristallisationsinhibierendes und Dispergiermittel sind bevorzugt in einer Menge von jeweils 1 bis 50 Gew.-% im desagglomerierten Bariumsulfat enthalten. Das Bariumsulfat ist bevorzugt in einer Menge von 20 bis 80 Gew.-% enthalten.

Bevorzugt setzt man in der vorliegenden Erfindung desagglomeriertes, redispergierbares Bariumsulfat ein. Der Begriff "desagglomeriert" bedeutet in diesem Zusammenhang nicht, dass die Sekundärpartikel vollständig zu isoliert vorliegenden Primärpartikeln zerkleinert sind. Er bedeutet, dass die Bariumsulfat-Sekundärteilchen nicht derart agglomeriert vorliegen, wie sie bei Fällungen üblicherweise anfallen, sondern in Form kleinerer Agglomerate. Bevorzugt weist das desagglomerierte Bariumsulfat Agglomerate (Sekundärteilchen) auf, von denen mindestens 90 % eine Partikelgröße von < 500 nm, insbesondere < 400 nm, ganz besonders < 200 nm aufweisen. Noch mehr bevorzugt sind mindestens 90 % der Sekundärteilchen kleiner als 130 nm, insbesondere bevorzugt kleiner als 100 nm, ganz insbesondere bevorzugt kleiner als 80 nm; noch bevorzugter weisen 90 % der Sekundärpartikel eine Größe von <50 nm, ja selbst <30 nm auf. Dabei liegt das Bariumsulfat teilweise oder sogar weitgehend vollständig in Form nicht agglomerierter Primärpartikel vor. Es handelt sich um mittlere Partikelgrößen, bestimmt durch XRD bzw. Laserbeugungsmethoden.

Ein entsprechendes Bariumsulfat weist bevorzugt eine BET-Oberfläche von mindestens 30 m²/g, insbesondere mindestens 40 m²/g, besonders bevorzugt von mindestens 45 m²/g und ganz besonders bevorzugt von mindestens 50 m²/g auf.

Bevorzugte Kristallisationsinhibitoren weisen mindestens eine anionische Gruppe auf. Bevorzugt enthält der Kristallisationsinhibitor als anionische Gruppe mindestens eine Sulfat-, mindestens eine Sulfonat-, mindestens zwei Phosphat-, mindestens zwei Phosphonat- oder mindestens zwei Carboxylatgruppen auf.

Als Kristallisationsinhibitor können beispielsweise für diesen Zweck bekanntermaßen verwendete Substanzen enthalten sein, beispielsweise kürzerkettige oder auch längerkettige Polyacrylate, üblicherweise in Form des Natriumsalzes; Polyether wie Polyglykolether; Ethersulfonate wie Laurylethersulfonat in Form des Natriumsalzes; Ester der Phthalsäure und ihrer Derivate; Ester des Polyglycerins; Amine wie Triethanolamin; und Ester von Fettsäuren wie Stearinsäureester, wie sie in der WO 01/92157 genannt werden.

Als Kristallisationsinhibitor kann auch eine Verbindung oder ein Salz der Formel (I) eingesetzt werden mit einer Kohlenstoffkette R und n Substituenten [A(O)OH]
worin
- R: ein organischer Rest ist, der hydrophobe und/oder hydrophile Teilstrukturen aufweist und wobei R eine niedermolekulare, oligomere oder polymere, ggf. verzweigte und/oder cyclische Kohlenstoffkette ist, die ggf. Sauerstoff, Stickstoff, Phosphor oder Schwefel als Heteroatome enthält, und/oder durch Reste substituiert ist, die über Sauerstoff, Stickstoff, Phosphor oder Schwefel an den Rest R gebunden sind und
wobei
- A: C, P (OH), OP(OH), S(O) oder OS(O) bedeutet,
und n 1 bis 10000 ist.

Wenn es sich um monomere oder oligomere Verbindungen handelt, ist n vorzugsweise 1 bis 5.

Zu brauchbaren Kristallisationsinhibitoren dieser Art gehören hydroxysubstituierte Carbonsäureverbindungen. Beispielsweise sind hydroxysubstituierte Mono- und Dicarbonsäuren mit 1 bis 20 Kohlenstoff-Atomen in der Kette (gerechnet ohne die Kohlenstoffatome der COO-Gruppen) gut brauchbar, wie beispielsweise Zitronensäure, Äpfelsäure (2-Hydroxy-1,4-dibutansäure), Dihydroxybernsteinsäure und 2-Hydroxyölsäure. Ganz besonders bevorzugt ist Zitronensäure und Polyacrylat als Kristallisationsinhibitor.

Sehr gut brauchbar sind auch Phosphonsäureverbindungen mit einem Alkyl-(bzw. Alkylen-)Rest mit einer Kettenlänge von 1 bis 10 Kohlenstoffatomen. Dabei sind Verbindungen brauchbar, die eine, zwei oder mehr Phosphonsäurereste aufweisen. Sie können zusätzlich durch Hydroxygruppen substituiert sein. Gut brauchbar sind beispielsweise 1-Hydroxyethylendiphosphonsäure, 1,1 -Diphosphonopropan-2,3-dicarbonsäure, 2-Phosphonobutan-1,2,2,4-tricarbonsäure. Diese Beispiele zeigen, dass auch solche Verbindungen brauchbar sind, die sowohl Phosphonsäurereste als auch Carbonsäurereste aufweisen.

Sehr gut brauchbar sind auch Verbindungen, die durch 1 bis 5 oder gar mehr Stickstoffatome sowie 1 oder mehrere, z. B. bis zu 5 Carbonsäure- oder Phosphonsäurereste enthalten und gegebenenfalls zusätzlich durch Hydroxygruppen substituiert sind. Hierzu gehören z. B. Verbindungen mit einer Ethylendiamin- oder Diethylentriamin-Grundstruktur und Carbonsäure- oder Phosphonsäuresubstituenten. Gut brauchbare Verbindungen sind beispielsweise Diethylentriamin-Pentakis-(Methanphosphonsäure), Iminodibernsteinsäure, Diethylentriaminpentaessigsäure, N-(2-Hydroxyethyl)-ethylendiamin-N,N,N-triessigsäure.

Sehr gut brauchbar sind auch Polyaminosäuren, beispielsweise Polyasparaginsäure.

Sehr gut brauchbar sind auch schwefelsubstituierte Carbonsäuren mit 1 bis 20 C-Atomen (gerechnet ohne die C-Atome der COO-Gruppe) und 1 oder mehr Carbonsäureresten, z. B. Sulfobernsteinsäure-bis-2-ethylhexylester(dioctylsulfosuccinat).

Es können natürlich auch Gemische der Additive, beispielsweise auch mit weiteren Additiven wie phosphoriger Säure, eingesetzt werden.

Die Herstellung des vorstehend beschriebenen Bariumsulfat-Zwischenprodukts mit den Kristallisationsinhibitoren der Formel (I) wird vorteilhaft so durchgeführt, dass man das Bariumsulfat in Anwesenheit des vorgesehenen Kristallisationsinhibitors fällt. Es kann vorteilhaft sein, wenn mindestens ein Teil des Inhibitors deprotoniert ist, beispielsweise indem der Inhibitor mindestens teilweise oder vollständig als Alkalimetallsalz, beispielsweise als Natriumsalz oder als Ammoniumsalz eingesetzt wird. Natürlich kann man auch die Säure einsetzen und eine entsprechende Menge der Base oder als Lauge zufügen.

Das desagglomerierte Bariumsulfat enthält neben dem Kristallisationsinhibitor auch ein dispergierend wirkendes Mittel. Dieses Mittel bewirkt, dass sich keine unerwünscht großen Agglomerate bilden, wenn es bereits bei der Fällung zugesetzt wird. Wie später noch beschrieben wird, kann es auch in einer anschließenden Desagglomerationsstufe zugesetzt werden; es verhindert eine Reagglomeration und bewirkt, dass Agglomerate leicht wieder redispergiert werden.

Bevorzugt weist das Dispergiermittel eine oder mehr anionische Gruppen auf, die in Wechselwirkung mit der Oberfläche des Bariumsulfats treten können. Bevorzugte Gruppen sind die Carboxylat-Gruppe, die Phosphatgruppe, die Phosphonatgruppe, die Bisphosphonatgruppe, die Sulfatgruppe und die Sulfonatgruppe.

Als Dispergiermittel sind einige der oben genannten Mittel verwendbar, die neben einer kristallisationsinhibierenden Wirkung auch eine dispergierende Wirkung aufweisen. Bei Verwendung solcher Mittel können Kristallisationsinhibitor und Dispergiermittel identisch sein. Geeignete Mittel können durch Handversuche ermittelt werden. Solche Mittel mit kristallisationsinhibierender und dispergierender Wirkung haben zur Folge, dass das gefällte Bariumsulfat in besonders kleinen Primärpartikeln anfällt und gut redispergierbare Agglomerate bildet. Verwendet man ein solches Mittel mit kristallisationsinhibierender und zugleich dispergierender Wirkung, kann man es bei der Fällung zusetzen und gewünschtenfalls zusätzlich eine Desagglomeration in seiner Anwesenheit durchführen.

Üblicherweise verwendet man unterschiedliche Verbindungen mit kristallisationsinhibitierender bzw. dispergierender Wirkung.

Sehr vorteilhaft ist desagglomeriertes Bariumsulfat, das solche Dispergiermittel enthält, die den Bariumsulfat-Partikeln eine elektrostatisch, sterisch oder elektrostatisch und sterisch die Agglomeration hemmende bzw. die Reagglomeration verhindernde Oberfläche verleihen. Ist ein solches Dispergiermittel bereits bei der Fällung anwesend, hemmt es die Agglomeration des gefällten Bariumsulfats, so dass bereits bei der Fällung desagglomeriertes Bariumsulfat anfällt. Wird solch ein Dispergiermittel nach der Fällung beispielsweise im Rahmen einer Naßvermahlung eingearbeitet, verhindert es die Reagglomeration des desagglomerierten Bariumsulfats nach der Desagglomeration. Bariumsulfat, das ein solches Dispergiermittel enthält, ist ganz besonders bevorzugt, weil es im desagglomerierten Zustand verbleibt.

Ein besonders vorteilhaftes desagglomeriertes Bariumsulfat ist dadurch gekennzeichnet, dass das Dispergiermittel Carboxylat-, Phosphat-, Phosphonat-, Bisphosphonat-, Sulfat- oder Sulfonatgruppen aufweist, die mit der Bariumsulfat-Oberfläche in Wechselwirkung treten können, und dass es einen oder mehr organische Reste R¹ aufweist, die hydrophobe und/oder hydrophile Teilstrukturen aufweisen.

Bevorzugt ist R¹ eine niedermolekulare, oligomere oder polymere, ggf. verzweigte und/oder cyclische Kohlenstoffkette, die ggf. Sauerstoff, Stickstoff, Phosphor oder Schwefel als Heteroatome enthält, und/oder durch Reste substituiert ist, die über Sauerstoff, Stickstoff, Phosphor oder Schwefel an den Rest R¹ gebunden sind und die Kohlenstoffkette gegebenenfalls durch hydrophile oder hydrophobe Reste substituiert ist. Ein Beispiel für solche substituierenden Reste sind Polyethergruppen. Bevorzugte Polyethergruppen weisen 3 bis 50, bevorzugt 3 bis 40 insbesondere 3 bis 30 Alkylenoxygruppen auf. Bevorzugt werden die Alkylenoxygruppen aus der Gruppe, bestehend aus der Methylenoxy-, Ethylenoxy-, Propylenoxy- und Butylenoxy-Gruppe, ausgewählt.

Bevorzugtes Bariumsulfat enthält ein Dispergiermittel, welches Gruppen zur An- oder Einkoppelung in Polymere aufweist. Dies können Gruppen sein, die diese An- oder Einkoppelung chemisch bewirken, z. B. OH-Gruppen oder NH-Gruppen oder NH₂-Gruppen. Bei den Gruppen kann es sich auch um solche handeln, die eine physikalische Ein- oder Ankoppelung bewirken.

Ein Beispiel für ein Dispersionsmittel, das die Oberfläche des Bariumsulfats hydrophobiert, stellen Phosphorsäurederivate dar, bei denen ein Sauerstoffatom der P(O)-Gruppe durch einen C3-C10-Alkyl- oder Alkenylrest und ein weiteres Sauerstoffatom der P(O)-Gruppe durch eine Polyetherfunktion substituiert ist. Ein weiteres acides Sauerstoffatom der P(O)-Gruppe kann in Wechselwirkung mit der Bariumsulfat-oberfläche treten.

Das Dispergiermittel kann beispielsweise ein Phosphorsäurediester sein, der als Teilstrukturen eine Polyethergruppe und eine C6-C10-Alkenylgruppe aufweist. Phosphorsäureester mit Polyether/Polyesterseitenketten wie Disperbyk®111, Phosphorsäureestersalze mit Polyether/Alkylseitenketten wie Disperbyk®102 und 106, entflockend wirkende Substanzen, z.B. auf Basis hochmolekularer Copolymere mit pigmentaffinen sauren Gruppen wie Disperbyk®190 oder polare saure Ester von langkettigen Alkoholen wie Disperplast®1140 sind weitere gut brauchbare Typen von Dispergiermitteln.

Ein Bariumsulfat mit ganz besonders guten Eigenschaften enthält als Dispergiermittel ein Polymer, das anionische Gruppen aufweist, die In Wechselwirkung mit der Oberfläche des Bariumsulfats treten können, beispielsweise die oben genannten Gruppen, und durch polare Gruppen, z.B. durch Hydroxy- oder Aminogruppen, substituiert ist. Bevorzugt sind Polyethergruppen enthalten, die terminal durch Hydroxylgruppen substituiert sind. Infolge dieser Substitution sind die Bariumsulfat-Partikel äußerlich hydrophilisiert. Derartiges erfindungsgemäßes Bariumsulfat zeigt keine Neigung zur Reagglomeration. Es kann bei der Anwendung sogar zu weiterer Desagglomeration kommen. Die polaren Gruppen, insbesondere Hydroxy- und Aminogruppen, stellen reaktive Gruppen dar. Ganz besonders gute Eigenschaften weist ein Bariumsulfat auf, das mit einem Dispergiermittel gecoatet ist, welches eine Vielzahl von Polycarboxylatgruppen und eine Vielzahl von Hydroygruppen aufweist sowie weitere Substituenten, die sterisch anspruchsvoll sind, z. B. Polyethergruppen. Eine ganz bevorzugte Gruppe von Dispersionsmitteln sind terminal an den Polyethergruppen durch Hydroxygruppen substituierte Polyetherpolycarboxylate.

Derartiges Bariumsulfat, das einen Kristallwachstumsinhibitor und eines der besonders bevorzugten sterisch die Reagglomeration verhindernden Dispergiermittel aufweist, besonders ein durch polare Gruppen wie oben beschrieben substituiertes Dispersionsmittel, weist den großen Vorteil auf, dass es sehr feine Primärpartikel und allenfalls gering agglomerierte Sekundärpartikel umfasst, die, weil sie leicht redispergierbar sind, sehr gut anwendbar sind, beispielsweise sich gut in Polymere einarbeiten lassen und nicht zur Reagglomeration neigen, ja sogar bei der Anwendung weiter desagglomerieren.

Das desagglomerierte gecoatete Bariumsulfat liegt bei der Einarbeitung in die Klebstoffgrundlagezweckmäßig in Form einer Dispersion in Wasser vor, vorzugsweise in einer Menge von 0,1 bis 60 Gew.-%, beispielsweise 0,1 bis 25 Gew.-% oder 1 bis 20 Gew.-%.

Die Herstellung von gut geeignetem Bariumsulfat wird in der WO 2005/054133 eingehend beschrieben. Beispielsweise kann Bariumsulfat zunächst unter Verwendung eines kristallisationsinhibierenden Mittels gefällt werden, und dann wird in einem zweiten Schritt das Dispergiermittel eingearbeitet, beispielsweise durch innige Desagglomeration in einer Perlmühle in Anwesenheit des Dispergiermittels. Alternativ kann bereits die Fällung in Anwesenheit eines Dispergiermittels erfolgen und gewünschtenfalls sich eine zusätzliche Behandlung mit Dispergiermittel, wiederum in einer geeigneten Zerkleinerungsapparatur wie einer Perlmühle erfolgen.

Bevorzugt führt man die Desagglomeration solange durch, bis das desagglomerierte Bariumsulfat Sekundärteilchen in der gewünschten Größe aufweist. Die Desagglomeration kann in Anwesenheit von Wasser als Naßdesagglomeration durchgeführt werden. Die beim Naßdesagglomerieren gebildete Dispersion kann, gegebenenfalls nach Einstellen der Konzentration an Bariumsulfat, in die Klebstoffdispersion eingearbeitet werden.

Man kann auch eine Trocknung vornehmen, z. B. eine Sprühtrocknung. Die dabei gebildeten Partikel zerfallen wieder sehr leicht in das desagglomerierte Bariumsulfat. Das erfindungsgemäße Bariumsulfat ist aus sehr kleinen Primärpartikeln gebildet, die Sekundärpartikel liegen in desagglomeriertem Zustand vor, und es ist redispergierbar. Es kann dann als trockenes Material oder nach erneuter Suspension in die Klebstoffdispersion eingearbeitet werden. Wenn man die ganz besonders bevorzugten polymeren Dispergiermittel einsetzt, die sterisch die Reagglomeration verhindern und polare Gruppen zur An- oder Einkoppelung in Polymere aufweisen, so wird bei der Resuspendierung gar eine weitere Desagglomeration beobachtet.

Um die erfindungsgemäßen Dispersionsklebstoffe zu erzeugen, kann man das Bariumsulfat trocken oder als wässrige Dispersion in eine Dispersion eines Klebstoffes einrühren. Es wäre zwar möglich, das Bariumsulfat als Suspension in einem organischen Lösungsmittel zum Dispersionsklebstoff hinzuzufügen und dann das organische Lösungsmittel abzudampfen; das ist aber umständlich.

Es hat sich herausgestellt, dass sich ein Verlust an Adhäsion und Tack einstellen kann, der im Wesentlichen unabhängig von der Konzentration an Bariumsulfat und vom verwendeten Dispergiermittel ist. Dieser Verlust an Adhäsion bzw. Tack ist jedoch nicht gravierend. Für die dynamische Scherfestigkeit und die statische Scherfestigkeit als Indikator für die Kohäsion ergibt sich als Trend ein signifikanter Kohäsionsgewinn, der mit zunehmender Konzentration an Bariumsulfat steigt. Bei mittlerem Bariumsulfatgehalt, etwa im Bereich von 10 bis 15 Gew.-% an chemisch modifiziertem Bariumsulfat, ergibt sich, dass Bariumsulfat, das mittels eines Dispergiermittels mit längeren Seitenketten wie Melpers^{®} 0030 dispergiert ist, eine größere Erhöhung der Kohäsion bewirkt. Es wird angenommen, dass die längeren Seitenketten mehr Wechselwirkungen mit den Polymerketten eingehen können und eine höhere dynamische und statische Scherfestigkeit bewirken. Bei höheren Gehalten an Bariumsulfat, z.B., bei 20 Gew.-% und mehr, ist der Kohäsionsgewinn von solchen Seitenketten nicht mehr beeinflusst und vergleichbar hoch.

Ein weiterer positiver Effekt wird am Wärmestand erkennbar. Ein Polyacrylatklebstoff ohne Zusatz von Bariumsulfat versagt bei der Wärmestandsprüfung bereits ab 100 °C. Die Zugabe von chemisch modifiziertem Bariumsulfat in einer Menge von 15 Gew.-% erhöht diesen Wert auf über 200°C. Auch PU-Dispersionen werden vorteilhaft verbessert.

Ein weiterer Gegenstand der Erfindung liegt deshalb in der Verwendung der erfindungsgemäßen Dispersionsklebstoffe in wärmebelasteten Anwendungsgebieten, z.B. der Automobilindustrie. Bevorzugt sind solche Anwendungsgebiete, in denen ständig oder zeitweise eine Temperatur von 50 °C oder mehr, beispielsweise 100 °C oder mehr, auf den Dispersionsklebstoff einwirkt. Dazu gehören Heißsiegelsysteme, insbesondere auf PU-Basis.

Der Vorteil der erfindungsgemäßen Dispersionsklebstoffe liegt insbesondere im höheren Wärmestand und der erhöhten Kohäsion. Die Dispersionsklebstoffe der Erfindung lassen sich deshalb besonders dort einsetzen, wo erhöhte Anforderungen an die Wärmestabilität und/oder an die Kohäsion gestellt werden. Ein weiterer Vorteil ist ihre Transparenz.

Die folgenden Beispiele sollen die Erfindung weiter erläutern, ohne sie in ihrem Umfang einzuschränken.

### Beispiele

Die Beispiele 1 bis 6 sind der WO 2005/054133 entnommen und erläutern die Herstellung von chemisch modifiziertem Bariumsulfat.

### Beispiel 1:

### Herstellung von feinteiligem Bariumsulfat als Zwischenprodukt durch Fällung in Anwesenheit von kristallisationsinhibierenden Mitteln

### Allgemeine Versuchsvorschrift:

### a) Handversuch:

In einem hohen 600 ml-Becherglas wurden 200 ml Additivlösung (darin waren 2,3 g Zitronensäure und 7,5 g Melpers^{®}0030 - besitzt eine Polyethylenglycol-Seitenkette von 38 nm - enthalten) und 50 ml Natriumsulfatlösung einer Konzentration von 0,4 mol/l vorgelegt. Das Rühren wurde mittels eines Ultraturrax-Rührers als Dispergierhilfe mit 5.000 U/min zentrisch in der Lösung durchgeführt. Im Einsaugbereich des Ultraturrax wurde die Bariumchloridlösung (Konzentration: 0,4 mol/l) mittels Dosimat zugeführt.

### b) Anlage (V) :

verwendet wurde eine Apparatur wie in der WO 01/92157 beschrieben, in welcher Schub-, Scher- und Reibungskräfte auf die Reaktionsmischung einwirken; das Additiv wurde in die Vorlage der Schwefelsäurelösung hinzugegeben.

Bezüglich weiterer brauchbarer Kristallisationsinhibitoren wird auf die Tabelle auf Seite 31 und 32 der WO 2005/054133 verwiesen.

### Beispiel 2:

### Herstellung von desagglomeriertem Bariumsulfat

Das gemäß Beispiel 1 hergestellte, Zitronensäure als kristallisationsinhibierendes Mittel enthaltende Bariumsulfat wurde getrocknet und unter Zusatz eines Dispergiermittels in einer Perlmühle naßvermahlen. Als Dispergiermittel wurde ein Polyetherpolycarboxylat eingesetzt, das an den Polyethergruppen terminal durch Hydroxy-Gruppen substituiert war (Melpers-Typ 0030 von Firma SKW, Molgewicht ca. 20.000, Seitenkette 5800).

Das Beispiel wird wiederholt unter Verwendung von DISPERBYK® 190, einem hochmolekularen Block-Copolymer mit sauren, pigmentaffinen Gruppen.

Das zitronensäurehaltige, mit dem terminal durch Hydroxygruppen substituierten Polyetherpolycarboxylat desagglomerierte Bariumsulfat und das mit DISPERBYK® 190 desagglomerierte Produkt erwiesen sich als besonders gut brauchbar für die Anwendung in Dispersionsklebstoffen. Es konnte festgestellt werden, dass das desagglomerierte Produkt (Sekundärpartikelgröße <80 nm) bei der Verarbeitung noch weiter desagglomerierte.

### Beispiel 3:

### Herstellung von Bariumsulfat durch Fällung in Anwesenheit von kristallisationsinhibierenden Mitteln und polymeren Dispergiermitteln bei der Fällung

Als Ausgangsmaterialien wurden Bariumchlorid und Natriumsulfat eingesetzt.

### 3.1. Becherglasversuche:

In einem 200 ml-Messkolben wurden 7,77 g des terminal durch Hydroxygruppen substituierten Polyetherpolycarboxylats vom Melpers-Typ (Melpers^{®}0030) der Firma SKW eingewogen und mit Wasser auf 200 ml aufgefüllt. Diese Menge entsprach 50 % Melpers (w = 30 %) bezogen auf die max. entstehende Menge BaSO₄ (= 4,67 g).

In einem 600 ml hohen Becherglas wurden 50 ml einer 0,4 m BaCl₂-Lösung vorgelegt, diese wurde mit 200 ml der Melperslösung versetzt. Mittig in das Becherglas tauchte ein Ultraturrax als Dispergierhilfe ein, der mit 5.000 U/min. betrieben wurde. Im Einsaugbereich des Ultraturrax gab man über einen Schlauch mittels Dosimaten 50 ml einer 0,4 m Na₂SO₄-Lösung, die mit Zitronensäure versetzt wurde (50 % Zitronensäure bez. auf max. entstehendes BaSO₄ = 2,33 g pro 50 ml/Na₂SO₄), zu. Sowohl die BaCl₂/Melpers-Lösung als auch die Na₂SO₄/Zitronensäure-Lösung wurden vor der Fällung mittels NaOH alkalisch gemacht; der pH lag bei ca. 11 - 12.

Das erhaltene, desagglomeriert anfallende Bariumsulfat besaß eine Primärpartikelgröße von etwa 10 bis 20 nm; die Sekundärpartikelgröße lag im gleichen Bereich, so dass es als weitgehend agglomeratfrei angesehen wurde.

### 3.2. Herstellung des desagglomerierten Bariumsulfats im Technikumsmaßstab

In einem 30l-Faß wurden 5l einer 0,4 m BaCl₂-Lösung vorgelegt. Dazu wurde unter Rühren 780 g des Melpers-Produkts gegeben (50 % bez. auf max. entstehendes BaSO₄ = 467 g). Diese Lösung wurde mit 20 l entmineralisiertem Wasser versetzt. In dem Faß wurde ein Ultraturrax betrieben, in dessen Einsaugbereich über ein Edelstahlrohr mittels Schlauchpumpe 5 I einer 0,4 m Na₂SO₄ -Lösung zugegeben wurde. Die Na₂SO₄-Lösung wurde vorher mit Zitronensäure versetzt (233 g/5 l Na₂SO₄ = 50 % Zitronensäure bez. auf max. entstehendes BaSO₄). Wie bei den Becherglasversuchen wurden auch vor dem Fällen in diesen Versuchen beide Lösungen mittels NaOH alkalisch gemacht. Die Eigenschaften bezüglich Primärpartikelgröße und Brauchbarkeit entsprachen denen des Bariumsulfats aus Beispiel 3.1. Es war ebenfalls weitgehend agglomeratfrei.

### 3.3. Herstellung des desagglomerierten Bariumsulfats mit höherdosierten Reaktantenkonzentrationen

Beispiel 3.2. wurde wiederholt. Diesmal wurden 1-molare Lösungen eingesetzt. Das erhaltene Bariumsulfat entsprach demjenigen des Beispiels 3.2.

### Beispiel 4:

### Herstellung von Bariumsulfat unter Vermahlung

### 4.1. Herstellung von chemisch dispergiertem Bariumsulfat durch Fällung in Anwesenheit von kristallisationsinhibierenden Mitteln und anschließendem Vermahlen in Anwesenheit von polymeren Dispergiermitteln

Als Ausgangsmaterialien wurden Bariumchlorid und Natriumsulfat eingesetzt. Bariumchlorid-Lösung und Natriumsulfatlösung wurden in Anwesenheit von Zitronensäure als Kristallisationsinhibitor unter Fällung von Bariumsulfat zur Reaktion gebracht. Das gefällte Bariumsulfat wurde getrocknet, in Isopropanol suspendiert, als Dispergiermittel wurde ein an den Polyethergruppen terminal durch Hydroxygruppen substituiertes Polyetherpolycarboxylat (Melpers^{®}0030) zugegeben und in einer Perlmühle desagglomeriert. Das Isopropanol wurde abgedampft. Das Bariumsulfat enthielt etwa 7,5 Gew.-% Zitronensäure und etwa 25 Gew.-% des Polyetherpolycarboxylates.

### 4.2. Herstellung unter Verwendung anderer Ausgangsverbindungen und eines anderen Kristalliationsinhibitors

Beispiel 4.1. wurde wiederholt. Anstelle von Bariumchlorid wurde Bariumhydroxidlösung eingesetzt und anstelle von Natriumsulfat wurde Schwefelsäure verwendet. Statt Zitronensäure wurden 3 Gew.-% Dispex^{®} N40 eingesetzt (ein Natriumpolyacrylat). Melpers^{®}0030 wurde in einer Menge von 8,5 Gew.-% eingesetzt.

### Beispiel 5: Herstellung einer Klebstoff-Dispersion mit chemisch modifiziertem Bariumsulfat

### 5.1. Erzeugung der Klebstoffgrundlage:

### Ansatz:

| Substanz | Menge [g] |
|---|---|
| Wasser | 192.00 |
| Methacrylsäure | 9.00 |
| Styrol | 70.50 |
| n-Butylacrylat | 145.50 |
| Natriumlaurylsulfat | 13.75 |

Natriumlaurylsulfat ist ein für die Emulsionspolymerisation geeignetes Tensid.

### Versuchsdurchführung:

Aus den in der vorstehenden Tabelle genannten Monomeren, Dispergiermitteln und dem Wasser wird eine ständig durchgerührte Emulsion erzeugt.

Aus 0.45 g Natriumperoxodisulfat und 35 g Wasser wird eine Initiatorlösung erzeugt.

In einen heizbaren und mit einer Temperaturregelung versehenen Rundkolben als Reaktor werden 600 g Wasser als Vorlage eingefüllt und auf etwa 80 °C erwärmt. Dann läßt man binnen 240 min die Emulsion der Monomeren und, gleichzeitig beginnend, binnen 280 min die Initiatorlösung zulaufen. Nach Beendigung des Zulaufenlassens wird noch 1 h bei 80 °C nachpolymerisiert. Die entstandene Dispersion wird auf Raumtemperatur abgekühlt und durch ein 200 µm-Filtersieb passiert. Der Feststoffgehalt beträgt 22 Gew.-%.

### 5.2. Zugabe des chemisch modifizierten Bariumsulfats:

Aus zitratgefälltem Bariumsulfat mit 15 Gew.-% Disperbyk® 190 wird eine wässrige Dispersion erzeugt, die 50 Gew.-% des chemisch modifizierten Bariumsulfats enthält. Diese Suspension wird in 364 g der unter 5.1. erhaltenen Dispersion tropfenweise unter gutem Rühren zugegeben. Die Dispersionen werden mit 10 ml entionisiertem Wasser verdünnt, durch ein 80 µm-Filtersieb gegeben und im Vakuum und durch Ultraschall entgast.

Die entgaste Probe wird dann in eine Silikonform überführt, in einen Wärmeschrank gestellt und ohne sie zu bewegen bei 30 °C in einen Klebfilm überführt.

Der Film wird dann mechanisch charakterisiert. Die dynamisch-mechanische Analyse (DMA) wird in einem Gerät der Firma Bohlin (TypCVO 120) durchgeführt. Die Bestimmung des komplexen Schubmoduls G wird durch Scherung einer Probe zwischen zwei parallelen Platten vorgenommen. bei der der zu untersuchende Polymerfilm zwischen zwei Aluminiumscheiben platziert wird und mit konstanter Frequenz mit steigender Temperatur geschert wird (Oszillation). Es werden DMA Messungen durchgeführt. Als Temperaturbereich wird -20°C - 200°C gewählt. Gemessen wird bei allen Proben der Speichermodul G', der Verlustmodul G" und tan d zur Bestimmung von Tg. Gekühlt wird mit flüssigem Stickstoff.

Es zeigt sich, dass - verglichen mit einem Film ohne Bariumsulfatzusatz - zwar die Stabilität bei der Dehnung etwas geringer ist, aber der Wärmestand und die Kohäsion sind verbessert. Es ist festzustellen, dass das Reinacrylat bereits unterhalb 100°C deutlich an Modul verliert. Der Film erweicht stark bei zunehmender Temperatur stark und verliert fast eine Zehnerpotenz bis 200°C. Dieser Film weist folglich einen schlechten Wärmestand auf. Beim Bariumsulfat/Disperbyk 190 enthaltende Film tritt ein deutlicher Abfall des Schubmoduls viel später ein, bei oberhalb von 130 °C, so dass das Nanopartikelsystem den Wärmestand merklich verbessert.

### 6. Dispersionskleber auf Basis von Polyurethan

### 6.1. Mit Melpers 0030 enthaltendem Bariumsulfat:

Bariumsulfat, das in Anwesenheit von Dispex N 40 gefällt worden war und dieses in einer Menge von 3 Gew.-% enthielt, wurde in Wasser suspendiert und in Anwesenheit von Melpers 0030 perlgemahlen. Der Gehalt an Melpers 0030 betrug in der Dispersion 8.5 Gew.-% (bezogen auf die Bariumsulfat-Trockenmasse), der Feststoffgehalt betrug 50 Gew.-%.

178 g einer Polyurethandispersion in Wasser (BASF Luphen DS 3548, ein PU-Polyester) wurden mit 40,0 g der Bariumsulfatdispersion (50 Gew.-% Feststoffgehalt) tropfenweise unter gutem Rühren versetzt. Die Herstellung von Polymerfilmen erfolgte dann im Wärmeschrank wie unter Beispiel 5 beschrieben. Die Filme sind bei Raumtemperatur hart und trüb, da sie kristallin sind. Bei 30 bis 40 °C gehen sie in den amorphen Zustand über, werden klar und erweichen. Das Bariumsulfat ist in den Filmen in einer Menge von 20 Gew.-% enthalten.

### 6.2. Mit Disperbyk 190 als Dispergiermittel:

Beispiel 6.1 wurde wiederholt, allerdings mit Disperbyk 190 als Dispergiermittel. Die Menge entsprach derjenigen des Beispiels 6.1.

### 6.3. Referenzfilm (Vergleichsbeispiel):

Beispiel 6.1. wurde wiederholt, allerdings ohne Einarbeiten von Bariumsulfat. Der gebildete Film wurde als Referenzfilm verwendet.

PU-Dispersionen werden als so genannte Heißsiegelsysteme verwendet. Sie erweichen bei 80 °C und bauen dabei eine Klebrigkeit auf; bei Raumtemperatur hingegen sind sie fest und nicht klebrig. Das Problem ist mangelnde Temperaturstabilität. Eine verbesserte Kohäsion und verbesserter Wärmestand sind bei diesen Systemen besonders wichtig.

### Mechanische Untersuchung der hergestellten Filme:

### Untersuchung der Reißkraft-Reißdehnung:

Die Untersuchung wurde mit einem Gerät der Firma Zwick/Roell durchgeführt. Es wurden grundsätzlich Dreifachmessungen vorgenommen. Die Schulterstück-Probekörper wurden aus den Filmen ausgestanzt.

Der Referenzfilm riss bei einer Längendehnung bei 700 %, die Spannung beim Reißen betrug 1.5 N/mm². Der erfindungsgemäße Klebfilm riß auch bei einer Längendehnung auf 800 % der ursprünglichen Länge nicht, hier war das Ende der Meßstrecke erreicht. Seine Spannung betrug bei einer Längendehnung auf 800 % etwa 4.5 bis 6 N/mm².

### Dynamisch-mechanische Analyse:

Die dynamisch-mechanische Analyse (DMA) wurde wiederum in einem Gerät der Firma Bohlin (TypCVO 120) durch Scherung einer Probe zwischen zwei parallelen Platten durchgeführt.

Referenzprobe: Es zeigte sich ein starkes Abfallen des Speichermoduls in Abhängigkeit von der Temperatur. So wurden bei 10⁴ Pa bei 120 °C durchschritten. Der Film erweichte stark oberhalb von 100 °C und war bei 200 °C nahezu flüssig.

Klebfilm mit 20 Gew.-% modifiziertem Bariumsulfat (Dispex N 40, 8.5 Gew.-% Melpers 0030): ein Wert von 10⁴ Pa wurde erst bei 147 °C durchschritten. Es liegt also ein deutlich verbesserter Wärmestand vor, der bei Heißsiegelsystemen von großer Vorteilhaftigkeit ist.

### Beispiel 6.4: Verwendung anderer PU.-Dispersionen

Beispiel 6.1. wurde wiederholt, allerdings unter Verwendung von Luphen D 207 und Luphen DS 3528. Dabei handelt es sich ebenfalls um wässrige, harzmodifizierteanionische, emulgatorfreie Emulsionen von Polyester-PU-Elastomeren. Luphen D 207 ist amorph, DS 3628 weist Teilchendurchmesser von 200 nm auf. Sie werden zum Herstellen von Kaschier-, Kontakt- und Schaumklebstoffen verwendet.

Für die Reißkraft-Reißdehnungsuntersuchung wurden die Filme 1 h bei 50°C im Ofen vorgewärmt, anschließend für jede Messung einzeln aus dem Ofen entnommen und in die Backen des Untersuchungsgerätes eingespannt. Nach exakt 60 Sekunden wurde mit der Messung begonnen. Die Filme befanden sich dann noch im amorphen Zustand.

Wiederum ergab sich auch hier eine deutliche Verbesserung der Eigenschaften verglichen mit dem bariumsulfatfreien Klebstofffilm. Die Kraft stieg von 11 N/mm² beim Refernzfilm von Luphen D 207auf 17 N/mm² bei der bariumsulfathaltigen Probe. Bei DS 3258 wurde eine Steigerung von 12 auf 18 N/mm² beobachtet.

## Patentansprüche

1. Wasserbasierter Dispersionsklebstoff, **gekennzeichnet durch** einen Gehalt an Nanopartikeln, die eine Primärpartikelgröße < 500 nm, und, sofern die Primärpartikel in Form von Sekundärpartikeln vorliegen, Sekundärpartikel einer Größe von <1000nm aufweisen.

2. Dispersionsklebstoff nach Anspruch 1, **dadurch gekennzeichnet, dass** die Primärpartikel kleiner als 400 nm, ganz besonders bevorzugt kleiner als 100 nm, insbesondere bevorzugt kleiner als 50 nm sind.

3. Dispersionsklebstoff nach Anspruch 1, **dadurch gekennzeichnet, dass**, sofern Sekundärpartikel vorliegen, 90 % oder mehr aller Sekundärpartikel eine Größe < 500 nm, mehr bevorzugt < 400 nm, ganz besonders bevorzugt < 100 nm aufweisen.

4. Dispersionsklebstoff nach Anspruch 1, **dadurch gekennzeichnet, dass** Nanopartikel enthalten sind, deren Kationen ausgewählt sind aus der Gruppe bestehend aus Ge, Sn, Pb, Mg, Ca, Sr, Ba und AI.

5. Dispersionsklebstoff nach Anspruch 1, **dadurch gekennzeichnet, dass** Nanopartikel enthalten sind, deren Anionen ausgewählt sind aus der Gruppe bestehend aus PO₄³⁻, SO₄²⁻, CO₃²⁻, F-, O²⁻ und OH⁻, wobei die Nanopartikel auch zwei oder mehr dieser Anionen wie Oxifluoriden enthalten können und gegebenenfalls auch Hydratwasser enthalten können.

6. Dispersionsklebstoff nach Anspruch 1, **dadurch gekennzeichnet, dass** die Nanopartikel ausgewählt aus der Gruppe bestehend aus BaSO₄, SrSO₄, MgCO₃, CaCO₃, BaCO₃, SrCO₃, Zn₃(PO₄)₂, Ca₃(PO₄)₂, Sr₃(PO₄)₂, Ba₃(PO₄)₂, Mg₂(PO₄)₂, SiO₂, Al₂O₃, MgF₂, CaF₂, BaF₂, SrF₂, TiO₂, ZrO₂, Fluoriden und Oxifluoriden von Lanthanidenmetallen sowie Alkalimetall- und Erdalkalimetallfluormetallaten.

7. Dispersionsklebstoff nach Anspruch 6, **dadurch gekennzeichnet, dass** als Nanopartikel chemisch nicht modifiziertes Bariumsulfat enthalten ist.

8. Dispersionsklebstoff nach Anspruch 6, **dadurch gekennzeichnet, dass** chemisch modifiziertes Bariumsulfat enthalten ist.

9. Dispersionsklebstoff nach Anspruch 1, **dadurch gekennzeichnet, dass** er auf Polyurethan, Epoxid oder Polyacrylat basiert.

10. Dispersionsklebstoff nach Anspruch 1, **dadurch gekennzeichnet, dass** der Gehalt an Bariumsulfat im Bereich von 3 bis 25 Gew.-%, bezogen auf das Gesamtgewicht des Dispersionsklebstoffes, liegt.

11. Dispersionsklebstoff nach Anspruch 7, **dadurch gekennzeichnet, dass** das Bariumsulfat durch Fällen hergestellt worden ist und einer intensiven Desagglomeration, vorzugsweise in einem Dissolver oder einer Mühle, unterworfen wurde.

12. Dispersionsklebstoff nach Anspruch 8, **dadurch gekennzeichnet, dass** die chemische Modifizierung des Bariumsulfats durch ein die Kristallisierung inhibitierendes Mittel, durch ein Dispersionsmittel oder mittels beider bewirkt ist.

13. Dispersionsklebstoff nach Anspruch 12, **dadurch gekennzeichnet, dass** der Kristallisationsinhibitor ausgewählt ist aus Verbindungen, die mindestens eine anionische Gruppe aufweisen.

14. Dispersionsklebstoff nach Anspruch 13, **dadurch gekennzeichnet, dass** der Kristallisationsinhibitor als anionische Gruppe mindestens eine Sulfat-, mindestens eine Sulfonat-, mindestens zwei Phosphat-, mindestens zwei Phosphonat- oder mindestens zwei Carboxylatgruppen aufweist.

15. Dispersionsklebstoff nach Anspruch 12, **dadurch gekennzeichnet, dass** das Dispergiermittel anionische Gruppen aufweist, die in Wechselwirkung mit der Oberfläche des Bariumsulfats treten können, vorzugsweise Carboxylat-, Phosphat-, Phosphonat-, Bisphosphonat-, Sulfat- oder Sulfonatgruppen.

16. Dispersionsklebstoff nach Anspruch 15, **dadurch gekennzeichnet, dass** das Dispergiermittel den Bariumsulfatpartikeln eine elektrostatisch, sterisch oder elektrostatisch und sterisch die Agglomeration hemmende bzw. Reagglomeration verhindernde Oberfläche verleiht.

17. Dispersionsklebstoff nach Anspruch 16, **dadurch gekennzeichnet, dass** das Dispergiermittel Carboxylat-, Phosphat-, Phosphonat-, Bisphosphonat-, Sulfat- oder Sulfonatgruppen aufweist, die mit der Bariumsulfat-Oberfläche in Wechselwirkung treten können, und einen oder mehr organische Reste R¹ aufweisen, die hydrophobe und/oder hydrophile Teilstrukturen aufweisen.

18. Desagglomeriertes Bariumsulfat nach Anspruch 17, **dadurch gekennzeichnet, dass** R¹ eine niedermolekulare, oligomere oder polymere, ggf. verzweigte und/oder cyclische Kohlenstoffkette ist, die ggf. Sauerstoff, Stickstoff, Phosphor oder Schwefel als Heteroatome enthält, und/oder durch Reste substituiert ist, die über Sauerstoff, Stickstoff, Phosphor oder Schwefel an den Rest R¹ gebunden sind und die Kohlenstoffkette gegebenenfalls durch hydrophile oder hydrophobe Reste substituiert ist.

19. Dispersionsklebstoff nach Anspruch 12, **dadurch gekennzeichnet, dass** das kristallisationsinhibierende Mittel und das Dispergiermittel in einer Menge von jeweils bis zu 2 Gewichtsteilen pro Gewichtsteil Bariumsulfat, vorzugsweise von bis zu 1 Gewichtsteil pro Gewichtsteil Bariumsulfat, insbesondere in einer Menge von jeweils 1 bis 50 Gew.-% im Bariumsulfat enthalten ist.

20. Verwendung von nanofeinem Bariumsulfat zur Herstellung von wasserbasierten Dispersionsklebstoffen mit verbesserter Kohäsion und verbessertem Wärmestand.

21. Verwendung von Dispersionsklebstoffen der Ansprüche 1 bis 19 in wärmebelasteten Anwendungsbereichen.
